# EUROPÄISCHE PATENTSCHRIFT

(11) **EP 0 367 968 B1**
(45) Veröffentlichungstag und Bekanntmachung des Hinweises auf die Patenterteilung: **13.01.1993**
(21) Anmeldenummer: 89117882.4
(22) Anmeldetag: 27.09.1989
(51) Int. Cl.: B01F 7/16, A47J 43/046, A21C 1/14, B01F 7/00

(54) **Maschine zur Verarbeitung von Lebensmitteln oder zur Herstellung von Pharmazie- und Chemieprodukten**
Machine for processing foods or for maufacturing pharmaceutical and chemical products
Machine de traitement de vivres ou pour la fabrication de produits pharmaceutiques et chimiques

(30) Priorität: 07.11.1988 DE 8813901 U
(43) Veröffentlichungstag der Anmeldung: 16.05.1990
(73) Patentinhaber: A. STEPHAN U. SÖHNE GMBH & CO., D-31789 Hameln (DE)
(72) Erfinder: Otto, Friedrich, D-3250 Hameln 1 (DE)
(74) Vertreter: Gramm, Werner, Prof., Dipl.-Ing.

(56) Entgegenhaltungen:
- EP-A- 0 191 119
- DE-A- 2 824 209
- DE-U- 8 809 812
- GB-A- 890 355
- US-A- 3 250 519
- US-A- 4 878 627

## Beschreibung

Die Erfindung betrifft eine Maschine zur Verarbeitung von Lebensmitteln oder zur Herstellung flüssiger oder pastöser Pharmazie- und Chemieprodukte, mit einer Schüssel, durch deren Schüsselboden eine lotrecht in die Schüssel ragende, von einem unterhalb der Schüssel angeordneten Motor hochtourig antreibbare Motorwelle geführt ist, die von einem an ihrem oberen freien Ende drehfest aber lösbar montierten hülsenförmigen Werkzeugträger übergriffen wird, der an seinem unteren Ende sich radial erstreckende Werkzeuge aufweist.

Eine derartige Ausführungsform läßt sich dem deutschen Gebrauchsmuster 88 09 812.5 entnehmen. In derartigen Maschinen müssen zuweilen auch Kleinstmengen einwandfreier Qualität hergestellt oder bearbeitet werden, wobei als Kleinstmenge z.B. ein Dreißigstel des Bruttoinhaltes der Schüssel angenommen werden kann. Bei einem Schüsselinhalt von 5 l würde also eine Menge von 0,17 l eine Kleinstmenge darstellen. Dabei ist es besonders wichtig, daß bei Bearbeitung oder Vermischung von Rezeptbestandteilen diese bei Drehzahlen von 300 bis 3000 U/min. in ihrer Gesamtheit bearbeitet werden. Bei dem Einsatz bisher bekanntgewordener Werkzeuge werden aufgrund der Ausbildung dieser Werkzeuge und unter Wirkung der Fliehkräfte die Rezeptbestandteile überwiegend an die Schüsselwand gespritzt und können dadurch nicht mehr automatisch der Kleinstmenge zugeführt werden. Dies erfordert ein häufiges Öffnen des Schüsseldeckels und ein Anschaben der Schüsselwandung, wodurch der Herstellungsprozeß verlängert wird und was in vielen Fällen gar nicht zumutbar ist.

Mit den vorbekannten Maschinen hat es sich auch als weitgehend unmöglich erwiesen, bei derartigen Kleinstmengen Rezeptbestandteile zwischen dem Schüsselboden und den umlaufenden Werkzeugen intensiv mit der übrigen Masse zu mischen und auszutauschen. Dieses Problem ergibt sich insbesondere bei hochpastösen bzw. hochviskosen Massen. Hingegen tritt dieses Problem bei den vorbekannten Maschinen dann nicht auf, wenn der Behälter zumindest bis zu einem Drittel seines Fassungsvermögens gefüllt ist, da dann eine ausreichende Turbulenz sowie ein gewisser Druck des Produktes in Richtung des Schüsselbodens erzeugt werden können.

Der Erfindung liegt die Aufgabe zugrunde, für die eingangs beschriebene Maschine ein Werkzeug zu entwickeln, mit dem sich auch Kleinstmengen unter Berücksichtigung vorstehender Forderungen be- und verarbeiten lassen.

Diese Aufgabe wird gemäß der Erfindung dadurch gelöst, daß die genannten Werkzeuge zumindest zwei gleiche, sich diametral gegenüberliegende und in der gleichen Horizontalebene umlaufende Mischfinger umfassen, die einen runden Querschnitt aufweisen, möglichst dicht über dem Schüsselboden angeordnet sind, so daß aufgrund des dabei entstehenden sehr geringen Spaltes zwischen den Mischfingern und dem Schüsselboden eine ausreichend hohe Turbulenz erzeugbar ist, so daß Material in diesem Bereich partiell umfassend gemischt wird, und mit ihrem freien radial außenliegenden, nach oben etwas abgebogenen Ende bis in den zwischen Schüsselboden und -wandung vorgesehenen Schüsselradius ragen und diesem konturverlaufend zumindest angenähert angepaßt sind.

Durch die Wahl eines runden Profils für die Mischfinger erhält man sowohl eine Druckkomponente gegen den Schüsselboden als auch eine Förderkomponente vom Schüsselboden weg. Aufgrund des sehr geringen Spaltes zwischen den Mischfingern und dem Schüsselboden entsteht eine ausreichend hohe Turbulenz, so daß Material in diesem Bereich partiell umfassend gemischt wird.

Insbesondere dann, wenn oberhalb der Mischfinger befindliches Material verarbeitet werden soll, ist es vorteilhaft, wenn die genannten Werkzeuge zusätzlich noch zumindest zwei oberhalb der Mischfinger und diesen gegenüber um jeweils 90° versetzt angeordnete und gleich ausgebildete Mischblätter umfassen, die um ihre Längsachse um einen spitzen Anstellwinkel derart verdreht sind, daß in Umdrehungsrichtung gesehen die Vorderkante des Mischblattes etwas höher liegt als seine Hinterkante.

Dabei ist es vorteilhaft, wenn sich die Mischblätter in radialer Richtung bis dicht an die Schüsselwand erstrecken.

Mit Hilfe dieser Mischblätter läßt sich das oberhalb der Mischfinger befindliche Material erfassen und aufgrund der Ausbildung der Mischblätter wieder nach unten fördern, so daß ein intensiver Materialaustausch der Gesamtrezeptur gewährleistet wird.

Bei hochviskosen Massen kann sich unter Umständen Material als Ring oberhalb der Mischblätter an der Schüsselwand festsetzen. Da dieses Material dann von den Mischblättern nicht mehr erreicht werden könnte, ist es vorteilhaft, wenn die Schüssel von einem Schüsseldeckel verschlossen ist, in dem zentrisch ein über eine Handkurbel o.dergl. um eine lotrechte Achse drehbarer Transportflügel gelagert ist, der an der Schüsselwand mit einer Schabkante anliegt, die sich nach unten bis unmittelbar über die Umlaufebene des oberen Mischblattes erstreckt. Durch Betätigung des Transportflügels läßt sich das oberhalb von den Mischblättern sich an der Schüsselwand ggf. abgesetzte Produkt wieder den umlaufenden Werkzeugen zuführen.

Neben der Vermischung aller Rezeptbestandteile kann es auch erforderlich sein, das Material zusätzlich zu schneiden (Kuttern). In diesem Fall ist es zweckmäßig, wenn die Vorderkante der Mischblätter als Messerschneide ausgebildet ist.

Darüber hinaus kann es aber auch erforderlich sein, neben dem Vermischen von Rezepturbestandteilen auch noch Rezepturbestandteile zu zerkleinern nach dem Aufprallprinzip. Das Werkzeug soll dann mit hoher Geschwindigkeit auf Produktpartikel treffen, so daß diese zerspringen der zerrieben werden. Diese Aufbereitung wird in der Pharmazie "verreiben" genannt. Hierfür ist es vorteilhaft, wenn die Vorderkante der Mischblätter als Prallfläche ausgebildet ist.

Um einen entsprechenden Austausch vornehmen zu können, ist es zweckmäßig, die Mischblätter auswechselbar am Werkzeugträger zu befestigen, oder aber den kompletten Werkzeugträger gegen einen mit anderen Werkzeugen bestückten Werkzeugträger auszutauschen.

Das erfindungsgemäße Werkzeug kann auch zum Kneten von Teigen eingesetzt werden.

Weitere Merkmale der Erfindung sind Gegenstand der Unteransprüche und werden in Verbindung mit weiteren Vorteilen der Erfindung anhand eines Ausführungsbeispieles näher erläutert.

In der Zeichnung ist eine als Beispiel dienende Ausführungsform der Erfindung dargestellt. Es zeigen:
Figur 1 eine Maschine in Vorderansicht und zum Teil in einem lotrechten Längsschnitt;

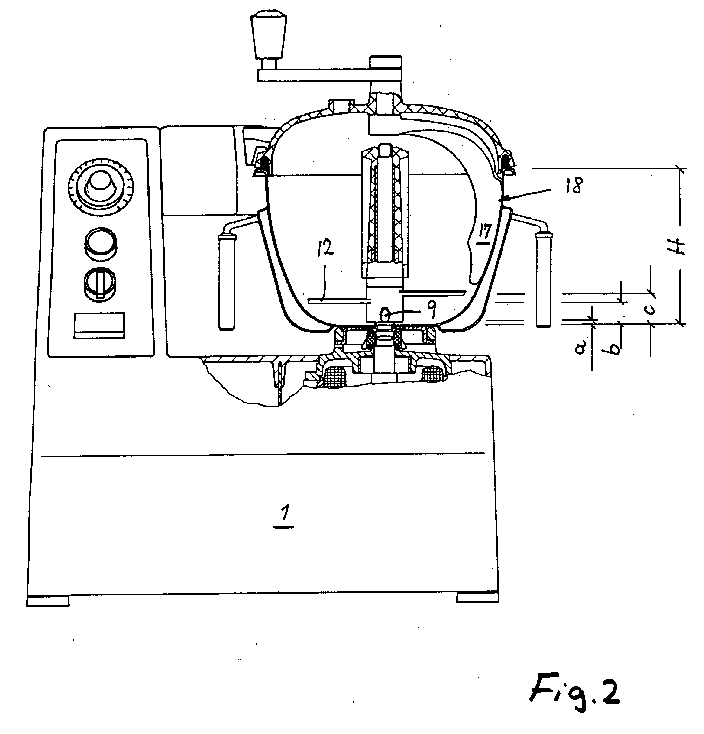

Figur 2 eine Darstellung gemäß Figur 1 mit einem um 90° verdrehten Werkzeugträger;
Figur 3 in vergrößertem Maßstab den in Figur 1 dargestellten Werkzeugträger;

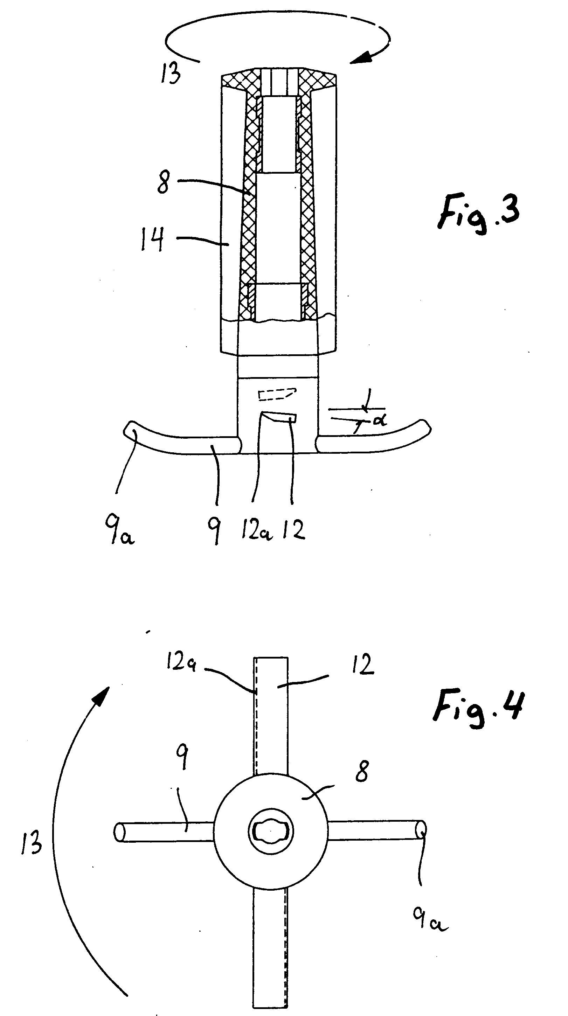

Figur 4 den Werkzeugträger gemäß Figur 3 in Draufsicht und
Figur 5 den Werkzeugträger gemäß Figur 3 in einer um 90° verdrehten Stellung gemäß Figur 2.

Die dargestellte Maschine besteht aus einem Ständer 1, der u.a. einen Motor 2 umschließt, dessen Motorwelle 3 zentrisch durch den Schüsselboden 4 einer Schüssel 5 geführt ist und lotrecht nach oben in diese Schüssel 5 ragt. In die Wellendurchtrittsöffnung des Schüsselbodens 4 ist ein Standrohr 7 eingeschweißt, das von einem Werkzeugträger 8 berührungsfrei übergriffen wird, der drehfest aber lösbar auf dem oberen freien Ende der Motorwelle 3 montiert ist. Das Standrohr 7 ragt über den größtmöglichen Füllstand innerhalb der Schüssel 5 hinaus. Die Schüssel 5 ist von einem Schüsseldeckel 6 verschlossen.

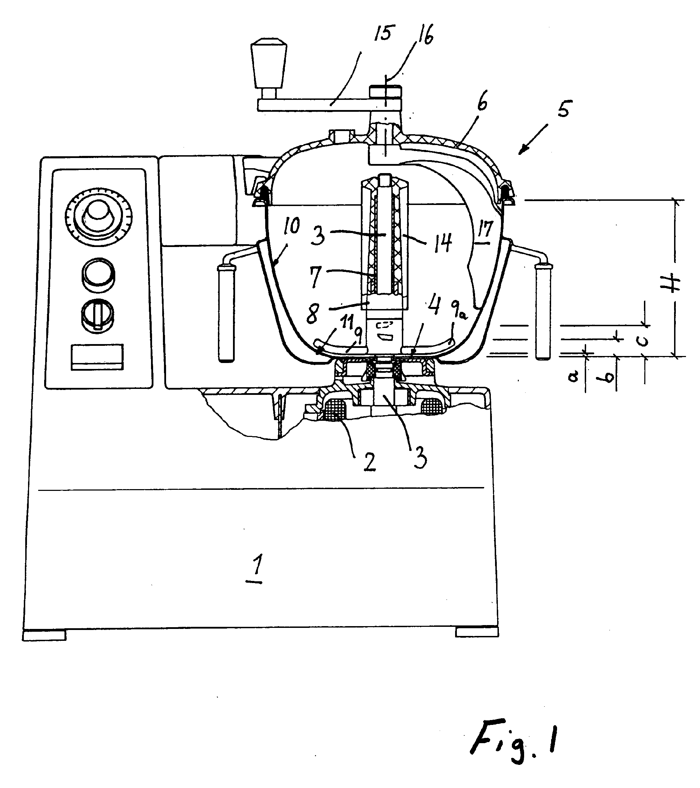

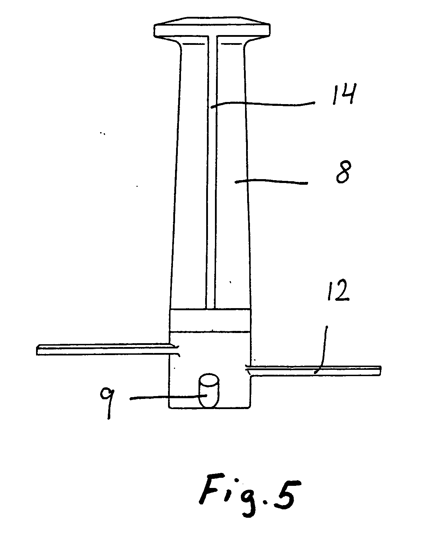

Der Werkzeugträger 8 weist an seinem unteren Ende sich radial erstreckende Werkzeuge auf. Dabei handelt es sich einmal um zwei gleiche, sich diametral gegenüberliegende und in der gleichen Horizontalebene umlaufende Mischfinger 9, die einen runden Querschnitt und vom Schüsselboden 4 einen lichten axialen Abstand a von etwa 2 mm aufweisen und mit ihrem freien radial außen liegenden, nach oben etwas abgebogenen Ende 9a bis in den zwischen Schüsselboden 4 und Schüsselwand 10 vorgesehenen Schüsselradius 11 ragen und diesem konturverlaufend angepaßt sind (siehe insbesondere Figur 1). Die Werkzeuge umfassen außerdem noch zwei oberhalb der Mischfinger 9 und diesen gegenüber um jeweils 90° versetzt angeordnete und gleich ausgebildete Mischblätter 12, die um ihre Längsachse um einen spitzen Anstellwinkel α derart verdreht sind, daß in Umdrehungsrichtung 13 gesehen (siehe insbesondere Figur 3) die Vorderkante 12a des Mischblattes 12 etwas höher liegt als seine Hinterkante. Insbesondere die Figuren 3 und 5 lassen erkennen, daß die sich gegenüberliegenden Mischblätter 12 in unterschiedlichen axialen Abständen b,c über dem Schüsselboden 4 angeordnet sind. Dabei laufen die beiden Mischblätter 12 in einer Höhenlage von etwa 1/5 bis 1/8 der Schüsselhöhe H um. Die Mischblätter 12 erstrecken sich in radialer Richtung bis dicht an die Schüsselwand 10. In dem dargestellten Ausführungsbeispiel ist die Vorderkante 12a der Mischblätter 12 als Messerschneide ausgebildet.

Der Werkzeugträger 8 weist in seinem axialen Befestigungsbereich der Werkzeuge 9,12 einen kreisrunden Querschnitt auf und ist oberhalb der genannten Werkzeuge mit zwei sich gegenüberliegenden Schleuderrippen 14 versehen.

Zentrisch in dem Schüsseldeckel 6 ist ein über eine Handkurbel 15 um eine lotrechte Achse 16 drehbarer Transportflügel 17 gelagert, der an der Schüsselwand 10 mit einer Schabkante 18 anliegt, die sich nach unten bis unmittelbar über die Umlaufebene des oberen Mischblattes 12 erstreckt.

In einer bevorzugten Ausführungsform kann die Schüssel 5 einen maximalen Durchmesser von 225 mm und eine Höhe H (ohne Schüsseldeckel 6) von 150mm aufweisen. Die Abstände a, b, c der Werkzeuge 9,12 vom Schüsselboden 4 betragen 2, 18 bzw. 28 mm. Der radiale Abstand zwischen den Enden 9a der Mischfinger 9 beträgt 135 mm und der entsprechende Abstand zwischen den Enden der Mischblätter 12 etwa 155 mm. Der Anstellwinkel α der Mischblätter 12 liegt vorzugsweise bei 5°. Der Profildurchmesser der Mischfinger 9 wird zweckmäßig mit 8 mm gewählt.

## Patentansprüche

1. Maschine zur Verarbeitung von Lebensmitteln oder zur Herstellung flüssiger oder pastöser Pharmazie- und Chemieprodukte, mit einer Schüssel (5), durch deren Schüsselboden (4) eine lotrecht in die Schüssel (5) ragende, von einem unterhalb der Schüssel (5) angeordneten Motor (2) hochtourig antreibbare Motorwelle (3) geführt ist, die von einem an ihrem oberen freien Ende drehfest aber lösbar montierten hülsenförmigen Werkzeugträger (8) übergriffen wird, der an seinem unteren Ende sich radial erstreckende Werkzeuge (9,12) aufweist, **dadurch gekennzeichnet,** daß die genannten Werkzeuge (9,12) zumindest zwei gleiche, sich diametral gegenüberliegende und in der gleichen Horizontalebene umlaufende Mischfinger (9) umfassen, die einen runden Querschnitt aufweisen, möglichst dicht über dem Schüsselboden (4) angeordnet sind, so daß aufgrund des dabei entstehenden sehr geringen Spaltes zwischen den Mischfingern und dem Schüsselboden eine ausreichen hohe Turbulenz erzeugbar ist, so daß Material in diesem Bereich partiell umfassend gemischt wird, und mit ihrem freien radial außenliegenden, nach oben etwas abgebogenen Ende (9a) bis in den zwischen Schüsselboden (4) und -wandung (10) vorgesehenen Schüsselradius (11) ragen und diesem konturverlaufend zumindest angenähert angepaßt sind.

2. Maschine nach Anspruch 1, dadurch gekennzeichnet, daß der lichte axiale Abstand (a) der Mischfinger (9) vom Schüsselboden (4) etwa 2 mm beträgt.

3. Maschine nach Anspruch 1 oder 2, dadurch gekennzeichnet, daß der Durchmesser der Mischfinger (9) etwa 8 mm beträgt.

4. Maschine nach Anspruch 1, 2 oder 3, dadurch gekennzeichnet, daß die genannten Werkzeuge (9,12) zusätzlich noch zumindest zwei oberhalb der Mischfinger (9) und diesen gegenüber um jeweils 90° versetzt angeordnete und gleich ausgebildete Mischblätter (12) umfassen, die um ihre Längsachse um einen spitzen Anstellwinkel (α) derart verdreht sind, daß in Umdrehungsrichtung (13) gesehen die Vorderkante (12a) des Mischblattes (12) etwas höher liegt als seine Hinterkante.

5. Maschine nach Anspruch 4, dadurch gekennzeichnet, daß der Anstellwinkel (α) etwa 5° beträgt.

6. Maschine nach Anspruch 4 oder 5, dadurch gekennzeichnet, daß die sich gegenüberliegenden Mischblätter (12) in unterschiedlichen axialen Abständen (b,c) über dem Schüsselboden (4) angeordnet sind.

7. Maschine nach Anspruch 6, dadurch gekennzeichnet, daß der axiale Höhenunterschied zwischen den beiden Mischblättern (12) etwa 10 mm beträgt.

8. Maschine nach einem der Ansprüche 4 bis 7, dadurch gekennzeichnet, daß die beiden Mischblätter (12) in einer Höhenlage von etwa 1/5 - 1/8 der Schüsselhöhe (H) umlaufen.

9. Maschine nach einem der Ansprüche 4 bis 8, dadurch gekennzeichnet, daß sich die Mischblätter (12) in radialer Richtung bis dicht an die Schüsselwand (10) erstrecken.

10. Maschine nach einem der Ansprüche 4 bis 9, dadurch gekennzeichnet, daß die Vorderkante (12a) der Mischblätter (12) als Messerschneide ausgebildet ist.

11. Maschine nach einem der Ansprüche 4 bis 9, dadurch gekennzeichnet, daß die Vorderkante der Mischblätter (12) als Prallfläche ausgebildet ist.

12. Maschine nach einem der vorhergehenden Ansprüche, dadurch gekennzeichnet, daß der Werkzeugträger (8) zumindest in seinem axialen Befestigungsbereich der Werkzeuge (9,12) einen kreisrunden Querschnitt aufweist.

13. Maschine nach einem der vorhergehenden Ansprüche, dadurch gekennzeichnet, daß der Werkzeugträger (8) in seinem axialen Bereich oberhalb der Werkzeuge (9,12) zumindest zwei sich gegenüberliegende Schleuderrippen (14) aufweist.

14. Maschine nach einem der vorhergehenden Ansprüche, dadurch gekennzeichnet, daß die Schüssel (5) von einem Schüsseldeckel (6) verschlossen ist, in dem zentrisch ein über eine Handkurbel (15) o.dergl. um eine lotrechte Achse (16) drehbarer Transportflügel (17) gelagert ist, der an der Schüsselwand (10) mit einer Schabkante (18) anliegt, die sich nach unten bis unmittelbar über die Umlaufebene des Oberen Mischblattes (12) erstreckt.

## Claims

1. Machine for processing foodstuffs or for producing liquid or pasty pharmaceutical and chemical products, having a bowl (5) through the bowl base (4) of which there is guided a motor shaft (3), which projects vertically into the bowl (5), may be driven at high speed by a motor (2) arranged below the bowl (5), and is surrounded by a sleeve-shaped tool carrier (8) mounted non-rotatably but detachably at its upper free end and having at its lower end radially extending tools (9, 12), characterized in that the said tools (9, 12) comprise at least two similar, mutually diametrically opposed mixing fingers (9) which rotate in the same horizontal plane, have a round cross-section and are arranged as closely as possible above the bowl base (4), so that as a result of the very small gap produced between the mixing fingers and the bowl base a sufficiently high degree of turbulence can be produced so that material in this region is partially fully mixed and these mixing fingers (9) project by means of their free radially outside end (9a), which is bent slightly upwards, into the bowl radius (11) provided between the bowl base (4) and bowl wall (10) and are at least approximately matched in the line of their contour to this bowl radius (11).

2. Machine according to Claim 1, characterized in that the axial clearance (a) between the mixing fingers (9) and the bowl base (4) is approximately 2 mm.

3. Machine according to Claim 1 or 2, characterized in that the diameter of the mixing fingers (9) is approximately 8 mm.

4. Machine according to Claim 1, 2 or 3, characterized in that the said tools (9, 12) additionally comprise at least two mixing blades (12) which are arranged above the mixing fingers (9) and offset in each case by 90° with respect thereto and which have the same construction, and which are turned about their longitudinal axis by an acute setting angle (α) such that, as seen in the direction of rotation (13), the leading edge (12a) of the mixing blade (12) is somewhat higher up than its trailing edge.

5. Machine according to Claim 4, characterized in that the setting angle (α) is approximately 5°.

6. Machine according to Claim 4 or 5, characterized in that the mutually opposed mixing blades (12) are arranged at different axial spacings (b, c) above the bowl base (4).

7. Machine according to Claim 6, characterized in that the axial difference in height between the two mixing blades (12) is approximately 10 mm.

8. Machine according to one of the Claims 4 to 7, characterized in that the two mixing blades (12) rotate at a height approximately 1/5 - 1/8 of the height (H) of the bowl.

9. Machine according to one of the Claims 4 to 8, characterized in that the mixing blades (12) extend in the radial direction close to the bowl wall (10).

10. Machine according to one of the Claims 4 to 9, characterized in that the leading edge (12a) of the mixing blades (12) is constructed as a knife blade.

11. Machine according to one of the Claims 4 to 9, characterized in that the leading edge of the mixing blades (12) is constructed as an impact surface.

12. Machine according to one of the preceding claims, characterized in that the tool carrier (8) has a circular cross-section at least in its axial region of securing the tools (9, 12).

13. Machine according to one of the preceding claims, characterized in that the tool carrier (8) has in its axial region above the tools (9, 12) at least two mutually opposed centrifugal ribs (14).

14. Machine according to one of the preceding claims, characterized in that the bowl (5) is closed by a bowl cover (6), in which there is centrally mounted a transporting panel (17) which is rotatable about a perpendicular axis (16) by way of a hand crank (15) or the ike and which bears against the bowl wall (10) by means of a scraper edge (18) which extends downwards to directly above the rotating plane of the upper mixing blade (12).

## Revendications

1. Machine pour la préparation de produits alimentaires ou bien pour la fabrication de produits pharmaceutiques et chimiques, liquides ou pâteux, comportant un bol (5) au travers du fond (4) duquel est guidé un arbre moteur (3) pénétrant verticalement dans le bol (5), pouvant être entraîné à une vitesse de rotation élevée par un moteur (2) disposé sous le bol (5), et sur lequel est emmanché un porte-outil (8) en forme de douille qui est monté de manière rotative, mais de manière amovible, sur l'extrémité libre supérieure de l'arbre, et qui porte à son extrémité inférieure des outils (9, 12) s'étendant radialement, caractérisée en ce que lesdits outils (9, 12) comprennent au moins deux doigts de mélange (9) identiques, qui sont diamétralement opposés et tournent dans le même plan horizontal, qui présentent une section droite circulaire, qui sont disposés le plus près possible au-dessus du fond (4) du bol, de sorte que l'interstice très faible qui en résulte entre les doigts de mélange et le fond du bol, permet d'engendrer une turbulence suffisamment élevée, de façon à ce que du matériau soit partiellement mélangé dans son ensemble dans cette zone, et qui avec leur extrémité libre (9a) située radialement à l'extérieur et légèrement cintrée vers le haut, s'étendent jusqu'au rayon de raccordement (11) du bol prévu entre le fond (4) et la paroi (10) du bol, en s'adaptant tout au moins approximativement au contour de ce rayon.

2. Machine selon la revendication 1, caractérisée en ce que la distance axiale libre (a) entre les doigts de mélange (9) et le fond (4) du bol, est environ égale à 2 mm.

3. Machine selon la revendication 1 ou 2, caractérisée en ce que le diamètre des doigts de mélange (9) est environ égal à 8 mm.

4. Machine selon la revendication 1, 2 ou 3, caractérisée en ce que lesdits outils (9, 12) comprennent en plus, au moins deux pales de mélange (12) de configuration identique, qui sont disposées au-dessus des doigts de mélange (9) et décalées par rapport à ceux-ci respectivement de 90°, et qui sont tournées autour de leur axe longitudinal d'un angle d'incidence aigu (α), de façon à ce que vu dans la direction périphérique de rotation (13) le bord avant (12a) de la pale de mélange (12) soit situé légèrement plus haut que son bord arrière.

5. Machine selon la revendication 4, caractérisée en ce que l'angle d'incidence (α) est environ égal à 5°.

6. Machine selon la revendication 4 ou 5, caractérisée en ce que les pales de mélange (12) opposées sont disposées à des distances axiales (b, c) différentes, au-dessus du fond (4) du bol.

7. Machine selon la revendication 6, caractérisée en ce que la différence de hauteur axiale entre les deux pales de mélange (12) est environ égale à 10 mm.

8. Machine selon l'une des revendications 4 à 7, caractérisée en ce que les deux pales de mélange (12) tournent à un niveau situé environ entre 1/5 et 1/8 de la hauteur (H) du bol.

9. Machine selon l'une des revendications 4 à 8, caractérisée en ce que les pales de mélange (12) s'étendent en direction radiale jusqu'à une très faible distance de la paroi (10) du bol.

10. Machine selon l'une des revendications 4 à 9, caractérisée en ce que le bord avant (12a) des pales de mélange (12) est réalisé sous forme d'une lame de coupe.

11. Machine selon l'une des revendications 4 à 9, caractérisée en ce que le bord avant des pales de mélange (12) est réalisé sous forme de surface d'impact.

12. Machine selon l'une des revendications précédentes, caractérisée en ce que le porte-outil (8) présente une section droite circulaire, tout au moins dans sa région axiale de fixation des outils (9, 12).

13. Machine selon l'une des revendications précédentes, caractérisée en ce que le porte-outil (8) comporte dans sa région axiale située au-dessus des outils (9, 12), au moins deux nervures de centrifugation (14) opposées.

14. Machine selon l'une des revendications précédentes, caractérisée en ce que le bol (5) est fermé par un couvercle (6) de bol dans lequel est montée de manière centrée, une ailette de transport (17) pouvant tourner au moyen d'une manivelle (15) ou analogue autour d'un axe vertical (16), et s'appliquant contre la paroi (10) du bol par l'intermédiaire d'un bord racleur (18) qui s'étend vers le bas jusqu'à un niveau situé directement au-dessus du plan de rotation de la pale de mélange (12) supérieure.
